# EUROPÄISCHE PATENTSCHRIFT

(11) **EP 2 147 078 B1**
(45) Veröffentlichungstag und Bekanntmachung des Hinweises auf die Patenterteilung: **29.08.2012**
(21) Anmeldenummer: 08735284.5
(22) Anmeldetag: 16.04.2008
(51) Int. Cl.: C09K 9/02

(54) **KOMPOSIT MIT INVERSEN THERMOCHROMEN EIGENSCHAFTEN, DIESES ENTHALTENDER VERBUNDWERKSTOFF SOWIE DESSEN VERWENDUNG**
COMPOSITE HAVING INVERSE THERMOCHROMIC PROPERTIES, COMPOSITE MATERIAL COMPRISING THE SAME, AND THE USE THEREOF
COMPOSITE AYANT DES PROPRIÉTÉS THERMOCHROMES INVERSES, MATÉRIAU COMPOSITE EN CONTENANT AINSI QUE SON UTILISATION

(30) Priorität: 16.04.2007 DE 102007017791
(43) Veröffentlichungstag der Anmeldung: 27.01.2010
(73) Patentinhaber: Fraunhofer-Gesellschaft zur Förderung der angewandten Forschung e.V., 80686 München (DE)
(72) Erfinder: SEEBOTH, Arno, 12557 Berlin (DE); MÜHLING, Olaf, 10711 Berlin (DE); RUHMANN, Ralf, 12685 Berlin (DE); VETTER, Renate, 12524 Berlin (DE)
(74) Vertreter: Pfenning, Meinig & Partner GbR
(86) Internationale Anmeldenummer: PCT/EP2008/003044
(87) Internationale Veröffentlichungsnummer: WO 2008/125350

(56) Entgegenhaltungen:
- EP-A- 0 477 140
- WO-A-2005/032838
- WO-A-2005/077665
- DE-A1- 4 025 796
- DE-A1- 10 312 464
- DE-A1- 10 339 442

## Beschreibung

Die Erfindung betrifft ein Komposit mit inversen thermochromen Eigenschaften, wobei das Komposit bei steigender Temperatur von einem farblosen in einen farbigen-Zustand übergeht. Das Komposit enthält dabei einen Farbstoff, einen Entwickler und ein Schmelzmittel sowie einen anorganischen Füllstoff. Ebenso betrifft die Erfindung einen Verbundwerkstoff, der eine Polymer-basierte Matrix enthält, in die mindestens ein Komposit mit inversen thermochromen Eigenschaften eindotiert ist. Verwendung finden diese Verbundwerkstoffe im Bereich der Sensorik, Solartechnik, Verkehrstechnik und Medizintechnik.

Chromogene Materialien ändern unter dem Einfluss externer Parameter, wie z.B. Druck, Licht, elektrische Felder und Temperatur, ihr optisches Verhalten. Thermochromie beinhaltet die Eigenschaft eines Materials in Abhängigkeit der Temperatur reversibel oder irreversibel seine Farbe zu ändern. Dies kann sowohl durch Änderung der Intensität und/oder des Wellenlängenmaximums erfolgen. In Seeboth et al., Chinese Journal of Polymer Science 2007 (2) 123, wird die Wechselwirkung zwischen Struktur und Thermochromie im Detail dargelegt.

Materialien basierend auf unterschiedlichen Stoffkomponenten mit allgemeinen thermochromen Eigenschaften sind aus dem Stand der Technik bekannt. Ihnen gemeinsam ist, dass sie generell einen thermisch induzierten Farb- oder Transparenzwechsel aufweisen. Die EP 1 084 860, US 4,028,118 und US 4,421,560 beschreiben die Schaltung des Farbeffektes, basierend auf einem Donator-Akzeptor-Farbstoffsystem, mit mindestens zwei weiteren Komponenten. Die Änderung der Farbe erfolgt in breiten Temperaturbereichen, wie zwischen -50 °C bis 120 °C oder -40 °C bis 80 °C. Die kleinste Temperaturdifferenz wird in EP 1,084,860 mit 30 °C angegeben. Das gesamte Farbstoffsystem lässt sich wahlweise auch in Form von Mikrokapseln mit einem Durchmesser von ca. 50 µm in die Polymermatrix einfügen.

Die Herstellung polymerer thermochromer Werkstoffe mit Hilfe von Aufdrucken (Kaschieren) einer thermochromen Farbe ist eine praxisnahe Lösung für einige Anforderungen und Wünsche der Verpackungsindustrie, löst jedoch nicht das gestellte Ziel. So werden gemäß US 2002/037421 Gläser mit einem Farbsystem zur Nutzung für den Sonnenschutz bedruckt oder entsprechend US 4,121,010 Polymere mit einer thermochromen Farbe, induziert durch Sulfate, Sulfide, Arsen, Wismut, Zink und anderen Metallen und deren Oxiden, überzogen. Hierdurch wird sowohl das Einsatzgebiet stark beschränkt als auch durch das erforderliche zusätzliche Coating (Printtechnik) eine preisreduzierende kontinuierliche Technologie verhindert.

Die Herstellung organischer thermochromer Komposite wird bis heute immer weiter optimiert. So werden dem Basiskomposit, bestehend aus mindestens einem Farbstoff, Entwickler und Schmelzmittel immer weitere Stoffe zudotiert. Hinsichtlich einer Mikroverkapselung oder einer Steuerung der Wechselwirkungen zwischen Farbstoff-Entwickler-Schmelzmittel werden zunehmend Tensidstrukturen dem Komposit zudotiert. Verwendet werden Caprylate, Malonate, Oxalate, Succinate, Palminate, Stearate, Behenate oder n-Dodecylphenole, Dodecylgallate, wie in EP 0 677 564 beschrieben.

Alle zuvor beschriebenen thermochromen Effekte, reversibel oder irreversibel, beruhen auf einem Farbübergang mit Temperaturerhöhung von farbig nach farblos oder von einem farbigen Zustand in einen andersfarbigen Zustand. Der Wechsel zwischen unterschiedlichen Farben geschieht durch Kombination mehrerer thermochromer Komposite oder durch Farbsubtraktionseffekte mit einem nichtthermochromen Farbstoff.

Thermochrome Komposite, die mit Temperaturerhöhung von einem farblosen in einen farbigen Zustand schalten - also Systeme mit inverser Thermochromie - sind bislang weniger bekannt.

Beschrieben wird ein derartiger inverser Komplex, hier auch Pigment genannt, in US 2006/01668822 und EP 1 323 540. In beiden Druckschriften besteht der Komplex - in Analogie wie zur bekannten klassischen Schaltung - aus a) einem organischen Elektronendonator, b) einem organischen Elektronenakzeptor und c) einem organischen Reaktionsmedium mit einem Schmelzpunkt unter 50 °C. Nachteil dieser Lösung ist neben einer großen Hysteresis im Schaltprozess vor allem die unzureichende mechanische und chemische Stabilität, so dass ein Einsatz in i) Thermoplasten mittels Extrusionstechnologie, ii) Duromeren oder iii) temperabhängigen Coatings nicht möglich ist. Die Schriften US 5,849,651, US 5,879,443 und US 5,928,988 beziehen sich auf den Schaltprozess von farblos nach farbig in einer organischen thermochromen Mischung durch rapides Abkühlen der flüssigen Phase ohne Wechselwirkung zu einer Matrix.

Aus der DE 40 25 796 A1 ist ein Verfahren zur Identifizierung der Leistung oder der Hauptwellenlänge von Licht bekannt, bei dem ein lichtempfindliches Farbmedium bestrahlt wird. Das Farbmedium umfasst dabei ein Basismaterial, wärmeempfindliches Farbmaterial und ein lichtabsorbierendes Material, das ausreichend Wärme freigibt, wobei sich bei Absorbtion des Lichtes das lichtempfindliche Farbmaterial verfärbt.

Die WO 2005/032838 A1 betrifft ein Verfahren zu Herstellung einer thermisch beschreibbaren Folie, bei der auf ein Pigment aufweisendes Substrat eine thermische Tinte mittels eines Druckers aufgebracht wird. Die Tinte umfasst dabei einen Farbbildner, einen Farbentwickler sowie einen Sensibilisator, wobei der Sensibilisator Dimethylterephthalat umfasst. Zudem beinhaltet die Tinte zumindest ein Pigment.

Die DE 103 12 464 A1 beschreibt eine Zusammensetzung zur Herstellung eines Duroplasten mit thermochromen Eigenschaften, der aus einer Mischung eines thermochromen Komposits und Ausgangskomponenten zur Erzeugung der Duroplasten besteht. Das thermochrome Komposit weist jeweils zumindest eine der folgenden Komponenten auf: Farbstoff, Entwickler, Schmelzmittel, grenzflächenaktiver Stoff und Polymer.

Der Erfindung liegt daher die Aufgabe zu Grunde, ein völlig neuartiges thermochromes Komposit zu schaffen, das reversibel oder irreversibel mit Temperaturerhöhung von farblos nach farbig und mit Temperaturerniedrigung von farbig nach farblos schaltet und sich in eine Matrix eines Verbundwerkstoffs unter Beibehaltung der Thermochromie dotieren lässt.

Diese Aufgabe wird durch das Komposit mit den Merkmalen des Anspruchs 1 und den Verbundwerkstoff mit den Merkmalen des Anspruchs 10 gelöst. In Anspruch 13 wird eine erfindungsgemäße Verwendung angegeben. Die weiteren abhängigen Ansprüche zeigen vorteilhafte Weiterbildungen auf.

Erfindungsgemäß wird ein Komposit mit inversen thermochromen Eigenschaften bereitgestellt, das mindestens einen Farbstoff sowie mindestens ein Schmelzmittel enthält. Weiterhin enthält das Komposit mindestens einen als Entwickler fungierenden anorganischen Füllstoff, der die zur Thermochromie führenden Wechselwirkungen zwischen Farbstoff und Entwickler derartig beeinflusst, dass der farblose Zustand bei niedrigen Temperaturen vorliegt, so dass bei steigender Temperatur das Komposit von einem farblosen in einen farbigen Zustand übergeht. Mit Erhöhung der Temperatur erfolgt ein molekularer Schaltmechanismus des Farbstoffs, wodurch das Komposit in eine farbige Form übergeht. Das Schmelzmittel kann dabei ebenfalls aktiv an der Wechselwirkung zwischen Farbstoff und Entwickler beteiligt sein.

Überraschenderweise konnte festgestellt werden, dass das erfindungsgemäße Komposit sowohl mechanisch stabil als auch chemisch resistent ist.

Hinsichtlich der anorganischen Füllstoffe können Verbindungen eingesetzt werden, die als Einzelmoleküle in Wechselwirkung mit dem Farbstoff und/oder dem Schmelzmittel treten. Ebenso ist es möglich, dass der anorganische Füllstoff ein Komplex ist, der in Wechselwirkung mit dem Farbstoff und/oder Schmelzmittel tritt.

Die geladenen bzw. polaren Zentren der Füllstoffe initiieren den Strukturaufbau eines übergeordneten Systems bestehend aus Farbstoff-Füllstoff-Schmelzmittel. Das System kann durch einen organischen Entwickler ergänzt werden, was jedoch nicht essentiell ist. Dieser hybride organisch-anorganische Komplex steuert das inverse thermochrome Verhalten.

Bezüglich beider zuvor genannter Varianten kann die Füllstoffoberfläche kationisch, anionisch oder amphiphil modifiziert sein.

Es können Stoffe, ausgewählt aus der Gruppe bestehend aus Metallsalzen der ersten und zweiten Hauptgruppe des PSE, auf SiOₓ basierende Verbindungen, wie z.B. Silica und/oder Quarzglas, und Mischungen hiervon, enthalten sein.

Die Metallsalze sind dabei vorzugsweise ausgewählt aus der Gruppe bestehend aus Lithiumchlorid, Natriumchlorid, Magnesiumchlorid, Aluminiumchlorid, Borchlorid, Zinnchlorid, Titanchlorid, Vanadiumchlorid, Vanadiumoxidchlorid, Germaniumchlorid, Phosphorchlorid, Magnesiumsulfat, Bariumsulfat, Natriumsulfat, Natriumhydrogensulfat, Natriumhydrogenphosphat, Calciumcarbonat, Borax und Mischungen hiervon.

Erfindungsgemäße ist der als Entwickler fungierende anorganische Füllstoff ausgewählt aus der Gruppe bestehend aus Muscovit, Nephelinsyenit, Wollastonit, Xonolit und deren Mischungen.

Eine weitere bevorzugte Variante sieht vor, dass die anorganischen Füllstoffe mit organischen oder siliciumorganischen Verbindungen beschichtet sind. Als organische Verbindungen kommen hierbei insbesondere Alkohole, Amine, Naphthalin, Anthracen und Phenanthracen in Frage. Die siliciumorganischen Verbindungen sind vorzugsweise Verbindungen der allgemeinen Formel XₙSiR₄₋ₙ mit R = unabhängig voneinander Alkyl, Vinyl, Alkoxy, Aminoalkyl oder Aminoalkoxy und X = unabhängig voneinander Cl, OH, OCH₃, OC₂H₅. Besonders bevorzugt sind Aminoalkylsilane, Dimethyldimethoxysilan, Hexamethyldisilazan, Dimethyldichlorsilan und Mischungen hiervon. Die Alkyl- bzw. Alkoxygruppen sind bevorzugt ausgewählt aus geradkettigen oder verzweigten C₁-C₁₆-Gruppen.

Reaktionen zwischen anorganischem Füllstoff und dem Organosilan bzw. seiner hydratisierten Form können zur Ausbildung von Lewis-Zentren auf der Oberfläche führen. Dieser Mechanismus im organisch-anorgansichen thermochromen Komplex kann sowohl vor als auch unmittelbar im Extrusionsschritt erfolgen.

Der im Komposit enthaltende Farbstoff ist erfindungsgemäß ausgewählt aus der Gruppe bestehend aus Pyridiniumphenolatbetainen, Sulfophthalein-Strukturen, Reichhardt-Farbstoffen, Triphenylmethan-Farbstoffen, Pyraninen, Indikatorfarbstoffen, Azofarbstoffen und deren Mischungen.

Erfindungsgemäß ist somit vorgesehen, dass das Komposit eine anorganische Verbindung aufweist, die als Entwickler und Füllstoff dient. Somit liegen Entwickler und Füllstoff als eine einzige Verbindung vor.

Zusätzlich kann ein anorganischer Entwickler,vorzugsweise ausgewählt aus der Gruppe bestehend aus 2,2'-Bis(4-hydroxyphenyl)propan, 2,2'-Bis(4-hydroxyphenyl)sulfon, Gallussäuredodecylester und Mischungen hiervon, enthalten sein.

Das Schmelzmittel ist vorzugsweise ausgewählt aus der Gruppe bestehend aus Octadecanol, Dodecanol, Hydroxycarbonsäuren, 1-Hexadecanol und Mischungen hiervon

Das Komposit liegt vorzugsweise als anorganisch-organisches Hybrid vor. Es zeichnet sich insbesondere dadurch aus, dass es eine mechanische, thermische und chemische Stabilität aufweist, die eine Bearbeitung, z.B. durch Extrusion oder Tempern erlaubt.

Das Schaltverhalten des Komposits kann dabei sowohl reversibel als auch irreversibel sein.

Erfindungsgemäß wird ebenso ein Verbundwerkstoff bereitgestellt, der eine Polymer-basierte Matrix mit mindestens einem eindotierten Komposit, wie er zuvor beschrieben wurde, enthält.

Die Matrix ist dabei vorzugsweise ausgewählt aus der Gruppe bestehend aus Thermoplasten, Duromeren, Lack oder Hydrogelen. Besonders bevorzugt besteht die Matrix aus Polyethylen, Polypropylen, Polyester, Polyamid, Acrylnitril-Butadien-Styren-Copolymer und deren Copolymeren und Blends.

Das Komposit kann dabei bevorzugt in der Matrix homogen verteilt sein, so dass die Matrix keinen Konzentrationsgradienten bezüglich des Komposits aufweist. Zur homogenen Verteilung trägt auch die Anwendung eines Zweischneckenextruders und der Einsatz kommerzieller Dispergierhilfen wie Dispex, Efka, Ruetasolv oder Glascol bei.

Verwendung finden die zuvor beschriebenen Verbundwerkstoffe zur Herstellung von Bauteilen für die Sensorik, Solartechnik, Verkehrstechnik und Medizintechnik.

Materialien mit inverser Thermochromie erschließen völlig neuartige Einsatzgebiete in der Sensorik, Solar-, Verkehrs- und Medizintechnik. Erweitert werden die Applikationsmöglichkeiten noch durch Kombination mit klassischen thermochromen Kompositen bzw. mit nichtthermochromen Farbpigmenten.

Anhand des nachfolgenden Beispiels und der nachfolgenden Figur soll die Erfindung näher beschrieben werden, ohne diese auf die hier gezeigte spezielle Ausführungsformen einschränken zu wollen.

### Beispiel 1

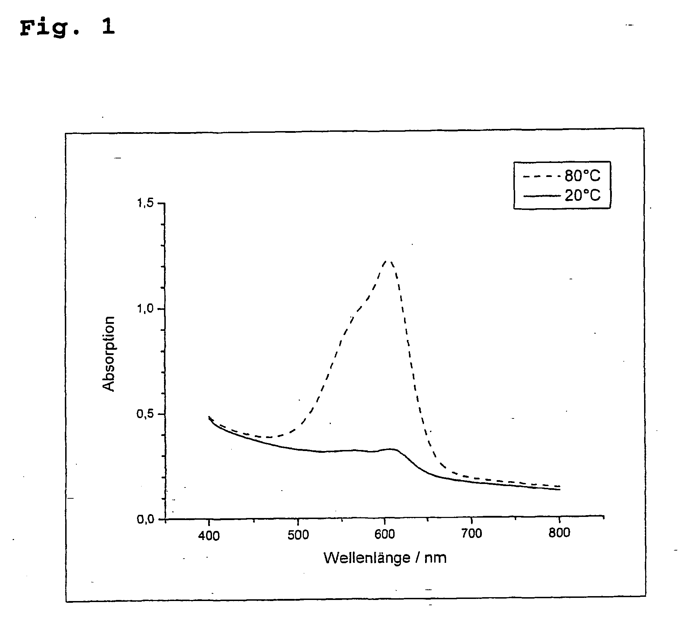

Erfindungsgemäß kann ein inverses thermochromes Komposit hergestellt werden durch den Einsatz der Einzelkomponenten Kristallviolettlacton (CVL), Xonotlit, Tetradecanol im Masseverhältnis 1:3:3,4. Anschließend wird das Komposit mit 4.5 Gew.-% in eine Polyolefinfolie extrudiert bei einer Temperatur oberhalb 255 °C, wobei der thermochrome Effekt erhalten bleibt. Mit Temperaturerhöhung wird die Folie blau. Der thermochrome Schaltvorgang ist reversibel im Temperaturbereich von 20 °C bis 80 °C (s. Fig. 1).

Fig. 1 zeigt die Absorption in Abhängigkeit von der Wellenlänge der in Beispiel 1 hergestellten erfindungsgemäßen Polyolefinfolie.

### Beispiel 2

Ein thermochromes Komposit besteht aus den Komponenten CVL, Muscovit, Titanchlorid, Phosphorchlorid. Das Massenverhältnis beträgt 1:3:2:1,4. Das Komposit wird mit 3,7 Gew.-% in eine Polyolefinfolie oberhalb 260 °C homogen verteilt extrudiert. Der inverse thermochrome Schaltvorgang ist reversibel zwischen Raumtemperatur und 85 °C.

## Patentansprüche

1. Komposit mit inversen thermochromen Eigenschaften, wobei das Komposit bei steigender Temperatur von einem farblosen in einen farbigen Zustand übergeht, enthaltend
a) einen Farbstoff ausgewählt aus der Gruppe bestehend aus Pyridiniumphenolatbetainen, Sulfophthalein-Strukturen, Reichhardt-Farbstoffe, Triphenylmethan-Farbstoffe, Pyranine, Indikatorfarbstoffe, Azofarbstoffe und deren Mischungen,
b) ein Schmelzmittel sowie
c) einen als Entwickler fungierenden anorganischen Füllstoff, ausgewählt aus der Gruppe bestehend aus Muscovit, Nephelinsyenit, Wollastonit, Xonolit und deren Mischungen.

2. Komposit nach Anspruch 1,
**dadurch gekennzeichnet, dass** die anorganischen Füllstoffe mit organischen Verbindungen, insbesondere ausgewählt aus der Gruppe bestehend aus Alkoholen, Aminen, Naphthalin, Anthracen und Phenanthracen sowie deren Derivaten und Mischungen hiervon, oder siliciumorganischen Verbindungen, wobei die siliciumorganischen Verbindungen insbesondere die allgemeine Formel xₙSiR₄₋ₙ mit R = unabhängig voneinander Alkyl, Vinyl, Alkoxy, Aminoalkyl oder Aminoalkoxy und x= unabhängig voneinander Cl, OH, OCH₃, OC₂H₅ aufweisen, beschichtet sind.

3. Komposit nach Anspruch 2,
**dadurch gekennzeichnet, dass** die siliciumorganische Verbindung ausgewählt ist aus der Gruppe bestehend aus Aminoalkylsilanen, Dimethyldimethoxysilan, Hexadimenthyldisilazan, Dimethyldichlorsilan und Mischungen hiervon.

4. Komposit nach einem der vorhergehenden Ansprüche,
**dadurch gekennzeichnet, dass** das Komposit eine anorganische Verbindung enthält, die den Entwickler und Füllstoff darstellt.

5. Komposit nach einem der vorhergehenden Ansprüchen,
**dadurch gekennzeichnet, dass** das Komposit ein anorganisch-organisches Hybrid ist.

6. Komposit nach einem der vorhergehenden Ansprüchen,
**dadurch gekennzeichnet, dass** das Komposit eine mechanische, thermische und chemische Stabilität aufweist, die eine Bearbeitung durch Extrusion oder Tempern erlaubt.

7. Komposit nach einem der vorhergehenden Ansprüche,
**dadurch gekennzeichnet, dass** das Schaltverhalten des Komposits reversibel oder irreversibel ist.

8. Komposit nach einem der vorhergehenden Ansprüche,
**dadurch gekennzeichnet, dass** zusätzlich ein organischer Entwickler, insbesondere ein Entwickler ausgewählt aus der Gruppe bestehend aus 2,2'-Bis(4-hydroxyphenyl)propan, 2,2'-Bis(4-hydroxyphenyl)sulfon, Gallussäuredodecylester und Mischungen hiervon, enthalten ist.

9. Komposit nach einem der vorhergehenden Ansprüche,
**dadurch gekennzeichnet, dass** das Schmelzmittel ausgewählt ist aus der Gruppe bestehend aus Octadecanol, Dodecanol, Hydroxycarbonsäuren, 1-Hexadecanol und Mischungen hiervon.

10. Verbundwerkstoff enthaltend eine polymerbasierte Matrix mit mindestens einem eindotierten Komposit nach einem der vorhergehenden Ansprüche.

11. Verbundwerkstoff nach Anspruch 10,
**dadurch gekennzeichnet, dass** die Matrix ausgewählt ist aus der Gruppe bestehend aus Thermoplasten, Duromeren, Lack oder Hydrogelen, insbesondere aus der Gruppe bestehend aus Polyethylen, Polypropylen, Polyester, Polyamid, Acrylnitril-Butadien-Styren-Copolymer und deren Blends.

12. Verbundwerkstoff nach einem der Ansprüche 10 oder 11,
**dadurch gekennzeichnet, dass** das Komposit in der Matrix homogen verteilt ist und die Matrix keinen Konzentrationsgradienten bezüglich des Komposits aufweist.

13. Verwendung der Verbundwerkstoffe nach einem der Ansprüche 10 bis 12 zur Herstellung von Bauteilen für die Sensorik, Solartechnik, Verkehrstechnik und Medizintechnik.

## Claims

1. Composite with inverse thermochromic properties, the composite changing from a colourless into a coloured state with increasing temperature, comprising
a) a colourant selected from the group consisting of pyridinium phenolate betaines, sulphophthalein structures, Reichhardt colourants, triphenylmethane colourants, pyranines, indicator colourants, azo colourants and mixtures thereof,
b) a fluxing agent and also
c) an inorganic filler acting as a developer, selected from the group consisting of muscovite, nepheline syenite, wollastonite, xonolite and mixtures thereof.

2. Composite according to claim 1,
wherein the inorganic fillers are coated with organic compounds, particularly selected from the group consisting of alcohols, amines, naphthalene, anthracene and phenanthracene and also derivatives and mixtures thereof, or silicon organosilicon compounds, wherein the organosilicon compounds particularly have the general formula XₙSiR₄₋ₙ with R = alkyl, vinyl, alkoxy, aminoalkyl or aminoalkoxy, independently of each other, and X = Cl, OH, OCH₃, OC₂H₅, independently of each other.

3. Composite according to claim 2,
wherein the organosilicon compound is selected from the group consisting of aminoalkylsilanes, dimethyldimethoxysilane, hexadimethyldisilazane, dimethyldichlorosilane and mixtures hereof.

4. Composite according to one of the preceding claims,
wherein the composite comprises an inorganic compound which represents the developer and filler.

5. Composite according to one of the preceding claims,
wherein the composite is an inorganic-organic hybrid.

6. Composite according to one of the preceding claims,
wherein the composite has mechanical, thermal and chemical stability which permits processing by extrusion or annealing.

7. Composite according to one of the preceding claims,
wherein the switching behaviour of the composite is reversible or irreversible.

8. Composite according to one of the preceding claims,
wherein additionally an organic developer, in particular a developer selected from the group consisting of 2,2'-bis(4-hydroxyphenyl)propane, 2,2'-bis(4-hydroxyphenyl)sulphone, gallic acid dodecylester and mixtures hereof, is comprised.

9. Composite according to one of the preceding claims,
wherein the fluxing agent selected from the group consisting of octadecanol, dodecanol, hydroxycarboxylic acids, 1-hexadecanol and mixtures hereof.

10. Composite material comprising a polymer-based matrix with at least one doped-in composite according to one of the preceding claims.

11. Composite material according to claim 10,
wherein the matrix is selected from the group consisting of thermoplasts, duromers, varnish or hydrogels, particularly from the group consisting of polyethylene, polypropylene, polyester, polyamide, acrylonitrile-butadiene-styrene copolymer and blends thereof.

12. Composite material according to one of the claims 10 or 11,
wherein the composite is distributed homogeneously in the matrix and the matrix has no concentration gradient with respect to the composite.

13. Use of the composite materials according to one of the claims 10 to 12 for the production of components for sensor technology, solar technology, transport and communications technology and medical technology.

## Revendications

1. Composite ayant des propriétés thermochromes inverses, dans lequel le composite passe, à température croissante, d'un état incolore à un état coloré, contenant :
a) un colorant choisi dans le groupe constitué des bétaïnes de phénolate de pyridinium, des structures sulfo-phtaléïnes, des colorants de Reichhardt, des colorants de triphénylméthane, de la pyranine, des colorants indicateurs, des colorants azoïques et de leurs mélanges,
b) un fondant ainsi que
c) une charge inorganique agissant comme développeur et choisie dans le groupe constitué de la muscovite, de la néphéline syénite, de la wollastonite, de la xonolite et de leurs mélanges.

2. Composite selon la revendication 1,
**caractérisé en ce que** les charges inorganiques sont revêtues de composés organiques, en particulier choisis dans le groupe constitué des alcools, des amines, du naphtalène, de l'anthracène et du phénanthracène ainsi que de leurs dérivés ou de leurs mélanges, ou de composés organosiliciques, dans lequel les composés organosiliciques, présentent en particulier la formule générale xₙSiR₄₋ₙ, où R désigne indépendamment les uns des autres un alkyle, un vinyle, un alcoxy, un aminoalkyle ou un aminoalcoxy , et x désigne indépendamment les uns des autres CI, OH, OCH₃, C₂H₅.

3. Composite selon la revendication 2,
**caractérisé en ce que** le composé organosilicique est choisi dans le groupe constitué des aminoalkylsilanes, du diméthyldiméthoxysilane, de l'hexadiméthyldisilazane, du diméthyldichlorosilane et de leurs mélanges.

4. Composite selon l'une quelconque des revendications précédentes,
**caractérisé en ce que** le composite contient un composé inorganique qui prépare le développeur et la charge.

5. Composite selon l'une quelconque des revendications précédentes, **caractérisé en ce que** le composite est un hybride inorganique-organique.

6. Composite selon l'une quelconque des revendications précédentes,
**caractérisé en ce que** le composite présente une stabilité mécanique, thermique et chimique qui permet un traitement par extrusion ou par recuit.

7. Composite selon l'une quelconque des revendications précédentes,
**caractérisé en ce que** le comportement de commutation du composite est réversible ou irréversible.

8. Composite selon l'une quelconque des revendications précédentes,
**caractérisé en ce que**, en outre, le composite contient un développeur organique, en particulier un développeur choisi dans le groupe constitué du 2,2'-bis(4-hydroxyphényl)propane, de la 2,2'-bis(4-hydroxyphényl)sulfone, de l'ester dodécylique de l'acide gallique et de leurs mélanges.

9. Composite selon l'une quelconque des revendications précédentes,
**caractérisé en ce que** le fondant est choisi dans le groupe constitué de l'octadécanol, du dodécanol, des acides hydroxycarboxyliques, du 1-hexadécanol et de leurs mélanges.

10. Matériau composite contenant une matrice à base de polymère avec au moins un composite dopé selon l'une quelconque des revendications précédentes.

11. Matériau composite selon la revendication 10,
**caractérisé en ce que** la matrice est choisie dans le groupe constitué des thermoplastes, des duromères, des vernis ou des hydrogels, en particulier dans le groupe constitué du polyéthylène, du polypropylène, des polyesters, des polyamides, du copolymère d'acrylonitrile-butadiène-styrène et de leurs mélanges.

12. Matériau composite selon l'une quelconque des revendications 10 ou 11,
**caractérisé en ce que** le composite est distribué de manière homogène dans la matrice et la matrice ne présente aucun gradient de concentration par rapport au composite.

13. Utilisation du matériau composite selon l'une quelconque des revendications 10 à 12 pour la fabrication de pièces de construction dans la technologie des capteurs, la technique solaire, l'ingénierie de trafic et la technique médicale.
